(19) **Europäisches Patentamt**
**European Patent Office**
**Office européen des brevets**

(11) **EP 2 365 517 A1**

(12) **EUROPÄISCHE PATENTANMELDUNG**

(43) Veröffentlichungstag:
**14.09.2011 Patentblatt 2011/37**

(51) Int Cl.:
*H01K 1/28* (2006.01)    *H01K 1/50* (2006.01)
*H01K 1/52* (2006.01)

(21) Anmeldenummer: **11155120.6**

(22) Anmeldetag: **21.02.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.03.2010 DE 102010002647**

(71) Anmelder: **Osram Gesellschaft mit beschränkter Haftung**
**81543 München (DE)**

(72) Erfinder: **Woisetschläger, Oliver Ernst**
**89567, Sontheim / Brenz (DE)**

(54) **Halogenglühlampe**

(57) Die Erfindung betrifft eine Halogenglühlampe für Fahrzeugscheinwerfer mit einem lichtdurchlässigen Lampengefäß (1), das einen hohlzylindrischen Lampengefäßabschnitt (12) besitzt, und mindestens einem innerhalb des hohlzylindrischen Lampengefäßabschnitts (12) angeordneten Glühfaden (3), wobei der mindestens eine Glühfaden (3) und das Lampengefäß (1) derart konstruiert sind, dass für den Zahlenwert P der in der Einheit Watt beim Betrieb der Halogenglühlampe an einer Spannung von 13,2 Volt gemessenen elektrischen Leistungsaufnahme und für den Zahlenwert D des in Millimeter angegebenen Innendurchmessers D des hohlzylindrischen Lampengefäßabschnitts (12) folgende Ungleichungen erfüllt sind: $P \geq 8D - 55$ und $P < 35$

EP 2 365 517 A1

**Beschreibung**

Die Erfindung betrifft eine Halogenglühlampe gemäß dem Oberbegriff des Anspruchs 1.

I. Stand der Technik

Eine derartige Halogenglühlampe ist beispielsweise in der WO 97/25733 A1 offenbart. Die in dieser Offenlegungsschrift beschriebene Halogenglühlampe besitzt ein lichtdurchlässiges Lampengefäß mit einem hohlzylindrischen Lampengefäßabschnitt, der eine Glühwendel umschließt. Die Konstruktion dieser Halogenglühlampe entspricht der Norm ECE-Regel 37 für Halogenglühlampen der Kategorie H8. Gemäß dieser Norm besitzen Halogenglühlampen der Kategorie H8 beim Betrieb an einer Prüfspannung von 13,2 Volt eine elektrische Leistungsaufnahme von 35 Watt.

Die WO 96/05610 A1 offenbart eine Halogenglühlampe mit einem lichtdurchlässigen Lampengefäß, das einen hohlzylindrischen Lampengefäßabschnitt aufweist, der zwei Glühwendeln und eine Abblendkappe umschließt. Die Konstruktion dieser Halogenglühlampe entspricht der Norm ECE-Regel 37 für Halogenglühlampen der Kategorie H4. Gemäß dieser Norm besitzen die Glühwendeln beim Betrieb an einer Prüfspannung von 13,2 Volt eine elektrische Leistungsaufnahme von maximal 75 Watt (Fernlichtglühwendel) bzw. maximal 68 Watt (Abblendlichtglühwendel).

II. Darstellung der Erfindung

Es ist Aufgabe der Erfindung, eine Halogenglühlampe für Fahrzeugscheinwerfer mit einer im Vergleich zum Stand der Technik reduzierten elektrischen Leistungsaufnahme bereitzustellen.

Diese Aufgabe wird erfindungsgemäß durch eine Halogenglühlampe mit den Merkmalen aus dem Anspruch 1 gelöst. Besonders vorteilhafte Ausführungen der Erfindung sind in den abhängigen Patentansprüchen beschrieben.

Die erfindungsgemäße Halogenglühlampe besitzt ein lichtdurchlässiges Lampengefäß mit einem hohlzylindrischen Lampengefäßabschnitt, der mindestens einen Glühfaden umschließt, wobei der mindestens eine Glühfaden und das Lampengefäß derart konstruiert sind, dass für den Zahlenwert P der in der Einheit Watt beim Betrieb der Halogenglühlampe an einer Spannung von 13,2 Volt gemessenen elektrischen Leistungsaufnahme und für den Zahlenwert D des in Millimeter angegebenen Innendurchmessers des hohlzylindrischen Lampengefäßabschnitts die Ungleichungen $P \geq 8D-55$ und $P < 35$ erfüllt sind.

Dadurch wird eine Halogenglühlampe mit einer im Vergleich zum Stand der Technik reduzierten Leistungsaufnahme bereitgestellt. Insbesondere besitzt die erfindungsgemäße Halogenglühlampe beim Betrieb an einer Fahrzeugbordnetzspannung von nominal 12 Volt eine elektrische Leistungsaufnahme von weniger als 35 Watt. Aufgrund ihrer verringerten Leistungsaufnahme leistet die erfindungsgemäße Halogenglühlampe einen Beitrag zur Reduzierung des Treibstoffverbrauchs und des $CO_2$-Ausstoßes des Fahrzeugs und trägt somit zum Umweltschutz bei. Der Innendurchmesser des hohlzylindrischen Lampengefäßabschnitts des Lampengefäßes der erfindungsgemäßen Halogenglühlampe ist auf die elektrische Leistungsaufnahme des mindestens einen Glühfadens der Halogenglühlampe abgestimmt, so dass die vorgenannte Beziehung $P \geq 8D-55$ erfüllt ist, um einen optimalen Ablauf des Halogenkreisprozesses innerhalb des Lampengefäßes zu gewährleisten. Insbesondere bedingt die Anpassung des Innendurchmessers des hohlzylindrischen Lampengefäßabschnitts an die reduzierte elektrischen Leistungsaufnahme der Halogenglühlampe gemäß der vorgenannten Ungleichung einen entsprechend verringerten Innendurchmesser des hohlzylindrischen Lampengefäßabschnitts. Demzufolge ist der mindestens eine Glühfaden näher an der Wand des Lampengefäßes angeordnet und die Lampengefäßwand wird während des Lampenbetriebs besser aufgeheizt, wodurch ein optimaler Ablauf des Halogenkreisprozesses erreicht wird.

Vorteilhafterweise ist die erfindungsgemäße Halogenglühlampe derart konstruiert, dass der Zahlenwert P der in der Einheit Watt beim Betrieb der Halogenglühlampe an einer Spannung von 13,2 Volt gemessenen elektrischen Leistungsaufnahme zusätzlich die Bedingung $P > 5$ erfüllt, damit die erfindungsgemäße Halogenglühlampe als Lichtquelle in Fahrzeugscheinwerfern für Tagfahrlicht, Nebellicht oder Kurvenlicht verwendbar ist. Vorzugsweise ist aus dem vorgenannten Grund die erfindungsgemäße Halogenglühlampe derart konstruiert, dass der Zahlenwert P der in der Einheit Watt beim Betrieb der Halogenglühlampe an einer Spannung von 13,2 Volt gemessenen elektrischen Leistungsaufnahme zusätzlich die Bedingung $15 \leq P \leq 30$ erfüllt.

III. Beschreibung des bevorzugten Ausführungsbeispiels

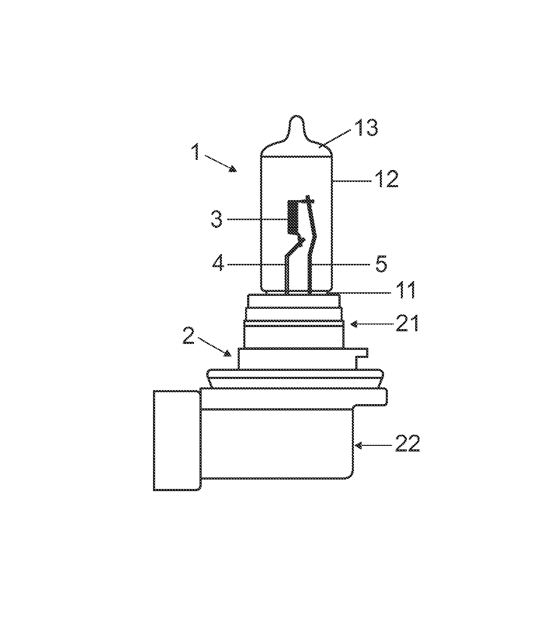

Nachstehend wird die Erfindung anhand eines bevorzugten Ausführungsbeispiels näher erläutert. In der Figur ist schematisch eine Seitenansicht einer Halogenglühlampe gemäß dem bevorzugten Ausführungsbeispiel der Erfindung dargestellt. Bei dieser Halogenglühlampe handelt es sich um eine Halogenglühlampe des Typs H16. Das heißt, diese Halogenglühlampe entspricht der Norm ECE-Regel 37 für Halogenglühlampen der Kategorie H16.

Diese Halogenglühlampe besitzt ein aus Quarzglas oder Hartglas, beispielsweise Alumino-Silikatglas, bestehendes Lampengefäß 1, das in dem Metallsockelteil 21 eines Lampensockels 2 fixiert ist. Der sich an das Metallsockelteil 21 anschließende Kunststoffsockelteil 22 des Lampensockels 2 ist mit elektrischen Anschlüssen (nicht abgebildet) zur Energieversorgung der Halogenglühlampe ausgestattet. Das gasdicht verschlossene Lampengefäß 1 besitzt ein abgedichtetes Ende 11, das in dem Metallsockelteil 21 fixiert ist, und einen hohlen kreiszylindrischen mittleren Lampengefäßabschnitt 12 sowie eine Lampengefäßkuppe 13, die dem abgedichteten Ende 11 gegenüberliegt und mit einer lichtundurchlässigen Beschichtung versehen ist. Der hohle kreiszylindrische Lampengefäßabschnitt 12 besitzt einen Innendurchmesser von 7,7 Millimeter. Im Innenraum des Lampengefäßes 1 befindet sich eine Füllgasmischung mit einem Kaltfülldruck im Bereich von ca. 1,5 bis 1,8 Megapascal, die Halogene und Krypton umfasst. Innerhalb des Lampengefäßes 1 ist im Bereich des kreiszylindrischen Lampengefäßabschnitts 12 ein als Wolframwendel ausgebildeter Glühfaden 3 angeordnet. Die Wickelachse der Wendel bzw. des Glühfadens 3 ist parallel zur Zylinderachse des kreiszylindrischen Lampengefäßabschnitts 12 ausgerichtet. Der Glühfaden 3 ist einfach gewendelt. Sein als Einfachgewickel ausgebildeter Wendelkörper besitzt eine Länge von 3,23 mm und einen Außendurchmesser von 0,811 mm sowie eine Windungszahl von 21. Die Drahtstärke des Wendeldrahtes beträgt 86 $\mu$m. Die beiden Enden des Glühfadens 3 sind jeweils von einem als Schweißhilfe dienenden Molybdänröhrchen umhüllt und mit einem Stromzuführungsdraht 4 beziehungsweise 5 aus Molybdän verschweißt. Die Stromzuführungsdrähte 4, 5 sind aus dem abgedichteten Ende 11 des Lampengefäßes 1 herausgeführt und mit den elektrischen Anschlüssen der Halogenglühlampe verbunden.

Diese Halogenglühlampe ist für den Betrieb an einer Bordnetzspannung von nominal 12 Volt vorgesehen und eignet sich als Lichtquelle in einem Fahrzeugscheinwerfer, beispielsweise für Tagfahrlicht, Nebellicht oder Kurvenlicht. Beim Betrieb dieser Halogenglühlampe an einer Spannung von 13,2 Volt, die üblicherweise als Prüfspannung zum Prüfen der Lampeneigenschaften verwendet wird, besitzt diese Halogenglühlampe bzw. ihr Glühfaden eine elektrische Leistungsaufnahme von maximal 26 Watt. Sie erzeugt einen Lichtstrom von ca. 500 1m.

Gemäß einem zweiten Ausführungsbeispiel der Erfindung, das sich nur in den Abmessungen und Daten des Glühfadens 3 von dem oben erläuterten ersten Ausführungsbeispiel unterscheidet, ist der Glühfaden 3 einfach gewendelt und sein als Einfachgewickel ausgebildeter Wendelkörper besitzt eine Länge von 3,23 mm, einen Außendurchmesser von 1,017 mm, eine Windungszahl von 19 und sein Wendeldraht weist eine Drahtstärke bzw. einen Drahtdurchmesser von 97 $\mu$m auf. Mit diesem Glühfaden besitzt die Halogenglühlampe bei einer Spannung von 13,2 V eine elektrische Leistungsaufnahme von maximal 22 Watt.

Die Erfindung beschränkt sich nicht auf die oben näher erläuterten Ausführungsbeispiele, sondern kann auch auf Halogenglühlampen anderer Typen bzw. Kategorien angewandt werden.

Die im Stand der Technik zitierten Halogenglühlampen gemäß der ECE-Kategorien H8 und H4 besitzen jeweils ein Lampengefäß, dessen zylindrischer Gefäßabschnitt einen Innendurchmesser von ca. 10,2 mm bzw. ca. 13,2 mm aufweist. Die Erkenntnis, dass zwischen den oben genannten Zahlenwerten P und D für die elektrische Leistungsaufnahme der Lampen beim Betrieb an 13,2 Volt und dem Innendurchmesser des zylindrischen Lampengefäßabschnitts der Zusammenhang $P \geq 8D - 55$ erfüllt sein sollte, kann also auch bei der Konstruktion von Halogenglühlampen anderer ECE-Kategorien angewandt werden.

**Patentansprüche**

1. Halogenglühlampe für Fahrzeugscheinwerfer mit einem lichtdurchlässigen Lampengefäß (1), das einen hohlzylindrischen Lampengefäßabschnitt (12) besitzt, und mindestens einem innerhalb des hohlzylindrischen Lampengefäßabschnitts (12) angeordneten Glühfaden (3),
**dadurch gekennzeichnet, dass**
der mindestens eine Glühfaden (3) und das Lampengefäß (1) derart konstruiert sind, dass für den Zahlenwert P der in der Einheit Watt beim Betrieb der Halogenglühlampe an einer Spannung von 13,2 Volt gemessenen elektrischen Leistungsaufnahme und für den Zahlenwert D des in Millimeter angegebenen Innendurchmessers D des hohlzylindrischen Lampengefäßabschnitts (12) folgende Ungleichungen erfüllt sind:

$$P \geq 8D - 55 \quad und \quad P < 35$$

2. Halogenglühlampe nach Anspruch 1, wobei für den Zahlenwert P der in der Einheit Watt beim Betrieb der Halogenglühlampe an einer Spannung von 13,2 Volt gemessenen elektrischen Leistungsaufnahme zusätzlich die Bedingung $P > 5$ erfüllt ist.

3. Halogenglühlampe nach Anspruch 1 oder 2, wobei für den Zahlenwert P der in der Einheit Watt beim Betrieb der Halogenglühlampe an einer Spannung von 13,2 Volt gemessenen elektrischen Leistungsaufnahme zusätzlich die

Bedingung $15 \leq P \leq 30$ erfüllt ist.

**EUROPÄISCHER RECHERCHENBERICHT**

Nummer der Anmeldung

EP 11 15 5120

Europäisches
Patentamt

European
Patent Office

Office européen
des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 43 989 A1 (PATRA PATENT TREUHAND [DE]) 29. Juni 1995 (1995-06-29) * Seite 4, Zeilen 8-10, 45-47; Abbildung 1 * ----- | 1-3 | INV. H01K1/28 H01K1/50 H01K1/52 |
| X,P | WO 2010/052140 A1 (OSRAM GMBH [DE]; HELBIG PETER [DE]; HERING OLIVER [DE]; KAPS HARALD [D] 14. Mai 2010 (2010-05-14) * das ganze Dokument * ----- | 1-3 | |

RECHERCHIERTE SACHGEBIETE (IPC)

H01K

Der vorliegende Recherchenbericht wurde für alle Patentansprüche erstellt

| Recherchenort | Abschlußdatum der Recherche | Prüfer |
|---|---|---|
| München | 17. Juni 2011 | Angloher, Godehard |

**ANHANG ZUM EUROPÄISCHEN RECHERCHENBERICHT
ÜBER DIE EUROPÄISCHE PATENTANMELDUNG NR.**

EP 11 15 5120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2011

| Im Recherchenbericht angeführtes Patentdokument | Datum der Veröffentlichung | Mitglied(er) der Patentfamilie | Datum der Veröffentlichung |
|---|---|---|---|
| DE 4343989 A1 | 29-06-1995 | CN 1138388 A<br>WO 9517764 A1<br>EP 0736222 A1<br>HU 74347 A2<br>JP 9506996 T<br>JP 3217371 B2<br>US 5896007 A | 18-12-1996<br>29-06-1995<br>09-10-1996<br>30-12-1996<br>08-07-1997<br>09-10-2001<br>20-04-1999 |
| WO 2010052140 A1 | 14-05-2010 | DE 102008056174 A1 | 12-05-2010 |

EPO FORM P0461

Für nähere Einzelheiten zu diesem Anhang : siehe Amtsblatt des Europäischen Patentamts, Nr.12/82

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9725733 A1
- WO 9605610 A1